# EUROPÄISCHE PATENTSCHRIFT

(11) **EP 2 156 151 B1**
(45) Veröffentlichungstag und Bekanntmachung des Hinweises auf die Patenterteilung: **09.03.2016**
(21) Anmeldenummer: 08735511.1
(22) Anmeldetag: 27.03.2008
(51) Int. Cl.: G01G 23/37

(54) **MEHRFACH-KRAFTMESSVORRICHTUNG, KRAFTMESSMODUL UND VERFAHREN ZUR ZUSTANDSÜBERWACHUNG**
MULTIPLE-FORCE-MEASURING DEVICE, FORCE-MEASURING MODULE, AND METHOD FOR STATUS MONITORING
DISPOSITIF DYNAMOMÉTRIQUE MULTIMODULE, MODULE DYNAMOMÉTRIQUE ET PROCÉDÉ DE SURVEILLANCE D'ÉTAT

(30) Priorität: 07.06.2007 US 942468 P
(43) Veröffentlichungstag der Anmeldung: 24.02.2010
(73) Patentinhaber: Mettler-Toledo GmbH, 8606 Greifensee (CH)
(72) Erfinder: BUCHER, Cyrill, CH-8610 Uster (CH); SKIDMORE, Aaron, Columbus, Ohio 43220 (US); BLISS, Douglas, Worthington, Ohio 43085 (US); USTER, Markus, CH-8606 Nänikon (CH)
(74) Vertreter: Mettler-Toledo
(86) Internationale Anmeldenummer: PCT/EP2008/053623
(87) Internationale Veröffentlichungsnummer: WO 2008/148590

(56) Entgegenhaltungen:
- EP-A- 1 557 648
- US-A- 5 004 058
- US-A1- 2001 034 671
- US-A1- 2004 026 135
- US-B1- 6 566 613

## Beschreibung

Die vorliegende Erfindung betrifft eine Mehrfach-Kraftmessvorrichtung, insbesondere eine Mehrfach-Wägevorrichtung, ein Kraftmessmodul sowie ein Verfahren zum Betrieb dieser Kraftmessvorrichtung, wie in den Ansprüchen offenbart.

Gemäss der Definition in dieser Schrift weist eine Mehrfach-Kraftmessvorrichtung mindestens zwei Kraftmessmodule und eine Anzeigevorrichtung auf. Das Kraftmessmodul wiederum weist zur Bestimmung einer Kraft eine mechanischelektrische Kraftmesszelle auf, die als Messgrössenumformer wirkt indem sie die Eingangsgrösse Kraft in ein elektrisches Ausgangssignal umformt. Eine besondere Form einer Mehrfach-Kraftmessvorrichtung ist eine Waage mit mehreren Wägevorrichtungen, sogenannten Wägemodulen. In diesem Fall ist die Kraftmesszelle als Wägezelle ausgebildet und dient zur mechanisch-elektrischen Umformung der von einem Wägegut ausgeübten Gewichtskraft in ein elektrisches Signal. Somit wird unter einem Kraftmessmodul oder einem Wägemodul eine Kraftmessvorrichtung beziehungsweise eine Waage ohne Anzeigevorrichtung verstanden.

Unter einer Mehrfach-Kraftmessvorrichtung ist eine Kraftmessvorrichtung zu verstehen, bei der die zu messende Kraft mittels einer mechanischen Vorrichtung, insbesondere einer Messplatte oder eines Behälters, auf mehrere Kraftmessmodule aufgeteilt wird. Dabei weist jedes Kraftmessmodul jeweils eine Kraftmesszelle auf, mittels der der jeweilige Teil der einwirkenden Kraft individuell ermittelt werden kann. Die Ergebnisse der einzelnen Kraftmesszellen werden dann an eine gemeinsame Ausgabevorrichtung weitergeleitet und dort zu einem Gesamtergebnis zusammengefügt.

Beispielsweise werden Mehrfach-Kraftmessvorrichtungen in Industrieanlagen zur Verwiegung des Inhalts von Becken, Tanks, Reaktorbehältern und dergleichen verwendet. Typischerweise sind dabei die Wägemodule als Hochlast-Wägemodule, als sogenannte Tank- oder Reaktorbehälter-Wägezellen ausgebildet. Pro zu verwiegendem Behälter werden dann mehrere Wägemodule zwischen den Füssen des Behälters und dem Fundament angeordnet. Dadurch steht jeder Fuss des Behälters auf einem Kraftmessmodul. Um das Gewicht des Behälters und/oder dessen Inhalt zu ermitteln, müssen die, von den Kraftmessmodulen ermittelten Messwerte addiert werden, da es sich jeweils um die Messwerte von Teilmassen handelt. Diese Berechnung wird meist in einer benachbarten Auswertevorrichtung und/oder Kontrollvorrichtung durchgeführt.

Hochlast-Kraftmesszellen kommen auch als Wägemodule in Wägevorrichtungen für Lastwagen zum Einsatz. Dabei weisen diese typischerweise mehrere Messplatten oder Wägeplatten auf, welche jeweils durch mehrere Kraftmessmodule gestützt werden. Jedes Kraftmessmodul misst dementsprechend ein Teilgewicht des Lastwagens und/oder eines oder mehrerer Anhänger. Die Messergebnisse der einzelnen Kraftmessmodule werden an die gemeinsame Auswertungsvorrichtung übertragen und dort weiter verarbeitet. Typischerweise ist die Auswertevorrichtung in einiger Distanz von den Messplatten beziehungsweise von den Kraftmessmodulen angeordnet, beispielsweise in einer bis zu einigen hundert Meter entfernten Kontrollvorrichtung.

Gemäss der US 2004/0245026 ist die Auswertevorrichtung als externe Vorrichtung, als sogenanntes Wägeterminal realisiert. Über eine, zum Wägeterminal gehörigen Anzeigevorrichtung können dann die Ergebnisse der Mehrfach-Kraftmessvorrichtung ausgegeben werden. Ausserdem ist in der Auswertevorrichtung eine Vorrichtung zur Stromversorgung der Mehrfach-Kraftmessvorrichtung angeordnet. Dementsprechend werden die einzelnen Kraftmessmodule jeweils über diese zentrale Stromversorgung mit elektrischer Energie versorgt.

Zur Übertragung der Messergebnisse und der Stromversorgung werden die Kraftmessmodule über Kabel mit der Auswertevorrichtung verbunden. Dabei werden typischerweise sowohl die Stromversorgung als auch die Übertragung der Messwerte über die gleichen Kabel, aber über getrennte Adern im Kabel, geführt. Ausserdem werden, zur Vereinfachung der Verkabelung, die einzelnen Kraftmessmodule über kürzere Verteilerleitungen mit einer Verteilvorrichtungen verbunden und nur diese Verteilvorrichtung wird über ein einzelnes Kabel, das sogenannte "home-run" Kabel, direkt mit der Kontrollvorrichtung verbunden. Die Stromversorgung und die

Übertragung der Messwerte werden somit in der Verteilvorrichtung zusammengefasst um eine mehrfache, parallele Verkabelung über die Distanz zwischen Messplatten und Kontrollhaus zu vermieden.

Wie in der EP 0 467 562 gezeigt, kann die Verteilvorrichtung bei vier Kraftmessmodulen so angeordnet werden, dass sich die Verteilvorrichtung im Zentrum eines, durch die vier Kraftmessmodule gebildeten Rechtecks, befindet. Dadurch wird eine geringe Kabellänge zwischen den Kraftmessmodulen und der Verteilvorrichtung erreicht, was in der Folge sowohl zu einer Reduktion der elektrische Störungen und der mechanischen Belastungen als auch zu einer Verringerung der Verkabelungskosten führt.

Insbesondere bei grösseren Installationen, beispielsweise bei Wägevorrichtungen für Lastwagen, wird oftmals eine Vielzahl von Messplatten und Kraftmessmodulen, beispielsweise vier Messplatten mit insgesamt sechzehn Kraftmessmodulen, eingesetzt. Somit ergeben sich dann vielschichtige, kaskadenförmige oder hierarchische Verschaltung von Verteilvorrichtungen um die gewünschte Zusammenfassung der Verbindungen zu erreichen. Bei sechzehn Kraftmessmodulen ergeben sich beispielsweise vier Verteilvorrichtungen in der ersten Stufe, zwei Verteilvorrichtungen in der zweiten Stufe, eine Verteilvorrichtung in der dritten Stufe und damit insgesamt sieben Verteilvorrichtungen.

Die Verteilvorrichtungen sind allerdings teuer und störanfällig. Die Fehleranfälligkeit steigt mit zunehmender Anzahl der Komponenten, sowohl bei der Installation als auch während des Betriebs und der Wartung. Deshalb ist es erwünscht, eine Kraftmessvorrichtung mit einer möglichst geringen Anzahl von Verteilvorrichtungen aufzubauen.

Bei der Wägevorrichtung gemäss der US 2004/0245026 A1 werden acht Wägemodule an eine zentrale Verteilvorrichtung angeschlossen. Somit kann auf den Einsatz hierarchisch, zwischengeschalteter Verteilvorrichtungen verzichtet werden. Die zentrale Verteilvorrichtung dient als gemeinsamer Anschlusspunkt, sowohl für die Stromversorgung als auch für die Kommunikationsverbindungen und bietet den Vorteil einer einfachen Anordnung der Leitungen. Allerdings ergeben sich aus dieser Anordnung meist längere Verteilleitungen und eine grössere Gesamtlänge der Verteilleitungen und somit eine grössere Störanfälligkeit und höhere Kosten.

Zur Vermeidung dieser Nachteile wird in der US 2004/0026135 die Verkabelung der Wägemodule durch eine Funkverbindung und eine individuelle, unabhängige Stromversorgung der einzelnen Wägemodule ersetzt. In diesen Fall wirkt die Verteilvorrichtung als Funkrelay zur Übertragung der Signale der Wägemodule an die Auswertevorrichtung. Ausserdem wird auch die Verteilvorrichtung mit einer unabhängigen Stromversorgung ausgerüstet um jegliche Verkabelung zu eliminieren. Zur individuellen, unabhängigen Stromversorgung der Wägemodule und der Verbindungseinheit werden Batterien eingesetzt. Diese Lösung hat jedoch den Nachteil, dass der Ladezustand der Batterien regelmässig überprüft und Batterien mit ungenügendem Ladezustand nachgeladen oder ausgewechselt werden müssen. Ferner hängt die Batterieleistung typischerweise stark von äusseren Umwelteinflüssen, insbesondere der Umgebungstemperatur, ab. Um einen stabilen, störungssicheren Betrieb der Wägemodule, insbesondere im Aussenbereich, zu gewährleisten, sind daher aufwendige Kontroll- und Überwachungsarbeiten erforderlich.

In der US 5004058 wird die serielle Datenkommunikation zwischen den Kraftmessmodulen einer Mehrfach-Kraftmessvorrichtung offenbart. Doch wird nicht offenbart wie die Stromversorgung erfolgt. Es ist zu vermuten, dass die Kraftmessmodule gleich wie in der US 2004/0026135 gespeist sind, das heisst mit individuelle Batterien. Zur Optimisierung der Länge der Verkabelung werden die Kraftmessmodulen in der US 5004058 zur Datenübertragung in einer linearen Daisy Chain Topologie zusammen verbunden. Doch der Nachteil dieser Topologie ist, dass im Falle einer Kabelstörung mindestens ein Kraftmessmodul komplett vom System ausgeschlossen wird.

Der vorliegenden Erfindung liegt daher die Aufgabe zugrunde, eine Mehrfach-Kraftmessvorrichtung, insbesondere eine Mehrfach-Wägevorrichtung und ein Verfahren zum Betrieb dieser Mehrfach-Kraftmessvorrichtung anzugeben, mit welcher sowohl ein einfacher und kostengünstiger Aufbau und als auch ein störungssicher Betrieb erreicht werden kann.

Diese Aufgabe wird mit einer Mehrfach-Kraftmessvorrichtung, einem Kraftmessmodul und einem Verfahren gelöst, welche die in den unabhängigen Ansprüchen angegebenen Merkmale aufweisen. Vorteilhafte Ausgestaltungen der Erfindung sind in weiteren, abhängigen Ansprüchen angegeben.

Die Erfindung betrifft eine Mehrfach-Kraftmessvorrichtung, insbesondere eine Mehrfach-Wägevorrichtung, mit mindestens drei, jeweils eine Kraftmesszelle und ein Stromzufuhrmittel aufweisenden Kraftmessmodulen und mit einer Stromversorgungseinheit welche der Stromversorgung der Kraftmessmodule dient. Dabei wird das Stromzufuhrmittel mindestens eines Kraftmessmoduls direkt oder über ein Verzweigungselement an ein mit der Stromversorgungseinheit verbundenes Kontrollkabel angeschlossen und die mindestens drei Kraftmessmodule mittels eines, der Weiterleitung der Stromversorgung dienenden Modulverbindungskabels reihenförmig miteinander verbunden. Durch diese Anordnung der Verkabelung kann die gesamte Kabellänge der Mehrfach-Kraftmessvorrichtung reduziert werden, da die Summe aller Leitungslängen bei reihenförmigen Verbindungen der Kraftmessmodule immer kleiner ist als bei einer sternförmigen Verteilung. Somit ergibt sich ein kostengünstiger Aufbau der zudem durch die einfache und übersichtliche Anordnung eine einfache Erkennung von Fehlern während des Betriebs und der Wartung ermöglicht.

Ausserdem kann auf Verteilleitungen, Verteilvorrichtungen, Segmentkoppler und Segmentleitungen verzichtet werden. Durch die Elimination dieser Vorrichtungen und Verkabelungen kann die Störungssicherheit der Kraftmessvorrichtung wesentlich verbessert werden. Diese Vorteile kommen besonders beim Aufbau und Betrieb von grösseren Installationen zum Tragen, da die Komplexität der Installation mit zunehmender Anzahl von Kraftmessmodulen bei der erfindungsgemässen Anordnung nur unwesentlich steigt.

Unter dem Begriff Stromzufuhrmitteln sind sämtliche Vorrichtungen zu verstehen, die der Stromversorgung des Kraftmessmoduls dienen, wie Zufuhrleitungen, Verteilleitungen, Spannungswandler, Stromwandler, Stabilisatoren, Glättungselemente oder Filterelemente. Darunter fallen auch Versorgungsspannungen für Kommunikationsverbindungen, beispielsweise die CAN-Power Stromversorgung eines CAN-Bus Kommunikationssystems.

Mit dem Begriff Kabel werden alle Arten von elektrischen Leitungen, wie einadrige oder mehradrige Kabel, Litzen oder Drähte, sowie die Führung des elektrischen Stroms über feste Vorrichtungen wie Erdungsschienen, Gehäuse und Verbindungsstangen, bezeichnet. Das Verzweigungselement kann auf verschiedenste Weise ausführt sein, beispielsweise als einfaches T-Element, als Gehäuse mit Anschlüssen, als verzweigtes Kabel oder als Kabelpeitsche.

Erfindungsgemäss werden mindestens drei Kraftmessmodule mittels der Modulverbindungskabel reihenförmig miteinander verbunden und dass das erste Kraftmessmodul der Reihe und das letzte Kraftmessmodul der Reihe jeweils direkt oder über das Verzweigungselement mit dem Kontrollkabel verbunden. Durch diese Mehrfacheinspeisung der Stromversorgung wird eine deutliche Reduktion des Spannungsabfalls bei den Kraftmessmodulen erreicht, insbesondere bei jenen Kraftmessmodulen welche über eine Vielzahl von zwischengeschalteten Kraftmessmodulen mit Ström, beziehungsweise mit elektrischer Energie versorgt werden. Ausserdem kann das Verzweigungselement in dieser Ausführungsform besonders einfach aufgebaut werden, da lediglich zwei Kraftmessmodule an das Kontrollkabel anzuschliessen sind. Aus dieser Anordnung ergibt sich ein besonders einfacher und kostengünstiger Aufbau der Mehrfach-Kraftmessvorrichtung.

In einer besonderen Ausgestaltung der Erfindung ist maximal ein Kraftmessmodul mit dem Kontrollkabel verbunden. Dadurch kann auf das Verzweigungselement verzichtet werden, was die Anzahl der benötigten Bauteile reduziert und damit die Störsicherheit verbessert.

Des Weiteren sind in einer bevorzugten Ausgestaltung alle Kraftmessmodule mittels Modulverbindungskabel reihenförmig miteinander verbunden. Auf diese Weise wird eine besonders einfache, übersichtliche und kostengünstige Anordnung erreicht.

In einer weiteren, erfindungsgemässen Ausgestaltung weisen die Kraftmessmodule jeweils ein Kommunikationsmittel auf und über das Modulverbindungskabel sind zusätzlich Kommunikationssignale zwischen diesen Kommunikationsmitteln übertragbar. Insbesondere kann diese Übertragung mittels eines Bussystems, gegebenenfalls mittels eines CAN-Bussystems, realisiert werden. Dadurch kann der Aufbau einer zusätzlichen Kommunikationseinrichtung vermieden werden. Ausserdem kann eine Bustopologie in besonders günstiger Weise mit der reihenförmigen Anordnung der Kraftmessmodule kombiniert werden. Dabei können die Kommunikationssignale unabhängig von der Stromversorgung über getrennte Adern im Modulverbindungskabel wie auch zusammen mit der Stromversorgung über gemeinsame Adern im Modulverbindungskabel geleitet werden.

In gleicher Weise wie beim Modulverbindungskabel kann auch die Kommunikation über das Kontrollkabel übertragen werden, beispielsweise in Form getrennter Adern oder zusammen mit der Stromversorgung über gemeinsame Adern.

Der Begriff des Kommunikationsmittels umfasst sämtliche Elemente die der Übertragung von Daten dienen, insbesondere Sender- und Empfängerelemente, Verarbeitungselemente für analoge und/oder digitale Daten, Transponder, Impedanzwandler, Transmitter, Leitungsanschlüsse, Steckverbinder oder Kupplungen. Die Kommunikationssignale können in analoger oder in digitaler Form als Messwerte, vorverarbeitete Messwerte, Zwischenwerte oder vollständig ausgewertete Messresultate, verarbeitete Ergebnisse, Zeitpunkte von Ereignissen, insbesondere Zeitpunkte des Überschreitens von Schwellwerten, ausgebildet sein. Des Weiteren können weitere Angaben und Messparameter übertragen werden, beispielsweise Angaben zur Identifikation der Kraftmessmodule, Angaben zu Zeit und Ort der Messungen oder Informationen über die Betriebszustände des Kraftmessmoduls. Ausserdem können auch Daten wie Steuerinformation, Betriebsparameter, Steuerungsprogramme oder Kalibrierdaten an die Kraftmessmodule übertragen werden.

Vorzugsweise werden die Kommunikationssignale der Kraftmessmodule an ein Terminal oder von einem Terminal übertragen. Dabei kann das Terminal in Form eines Leitrechners, einer Anlagensteuerung, eines Prozessleitsystems aber auch als einfaches Ausgabegerät, beispielsweise als Bildschirm und/oder als Drucker ausgebildet sein. Insbesondere können bei kleineren Anlagen die Funktionen der Stromversorgung, der Auswertung der Messungen, der Steuerung der Kraftmessvorrichtung und die Anzeige in einer Vorrichtung, beispielsweise in einem Bürocomputer, zusammengefasst sein.

In einer weiteren erfindungsgemässen Ausgestaltung weisen die Kraftmessmodule jeweils eine Vorrichtung zur Bestimmung und/oder Überwachung der elektrischen Spannung des Stromzufuhrmittels auf. Insbesondere kann die Vorrichtung der Bestimmung und/oder Überwachung der positiven Spannung und/oder der negativen Spannung dienen, wobei die Spannungen gegebenenfalls bezüglich eines gemeinsamen Potentials, insbesondere des Erdpotentials bestimmt und/oder überwacht werden können. Dadurch können wertvolle Informationen sowohl zum Betriebszustand der Stromversorgung der Kraftmessmodule als auch zum Zustand der Modulverbindungskabel gewonnen werden.

In einer bevorzugten Ausgestaltung wird die Überwachung der elektrischen Spannung erreicht indem die gemessen Werte auf Einhaltung von Schwellwerten überprüft werden und bei Überschreitungen der Schwellwerte werden Aktionen, wie das Übertragen von Meldungen und/oder die Neukalibrierung oder die Abschaltung des betreffenden Kraftmessmoduls, ausgelöst. Somit kann einerseits das Auftreten von Fehlern in den Kraftmessmodulen und/oder den Modulverbindungskabel frühzeitig erkannt und andererseits die Lokalisierung dieser Fehler wesentlich erleichtert werden. Dabei kann die Überwachung sowohl bei der Installation und/oder Kalibrierung als auch während des Betriebs der Kraftmessvorrichtung eingesetzt werden.

Des Weiteren ergibt die Bestimmung der elektrischen Spannung des Stromzufuhrmittels und/oder deren Verlauf wesentliche Informationen über den aktuellen Zustand des Kraftmessmoduls und dessen zu erwartender zukünftiger Verlauf. So kann aus diesen Daten Aussagen bezüglich der zu erwartenden, zukünftigen Wartungsarbeiten, den Fortschritt des Alterungsprozesses, die Veränderung der Umgebungsbedingungen oder die zu erwartende Restlebensdauer der Kraftmessmodule gewonnen werden. So kann beispielsweise eine starke zeitliche Änderung der Spannung an einer Zelle auf eine korrosionsbedingte Schädigung der Kupplungsvorrichtung eines Kraftmessmoduls hinweisen. Diese Überwachung ist besonders vorteilhaft bei grossen Installationen mit einer Vielzahl von Kraftmessmodulen.

Die Schwellwerte können mittels theoretischen Berechnungen, insbesondere unter Brücksichtigung der charakteristischen Grössen der Modulverbindungskabel wie Leitungslänge und Leitungsquerschnitt und/oder der Innenwiderstände des Kraftmessmoduls und/oder mittels mindestens einer Referenzmessung bestimmt werden. Die Werte der Referenzmessungen können vorzugsweise durch Messungen an einer neu errichteten und/oder neu kalibrierten Kraftmessvorrichtung gewonnen und in einer Speichereinheit gespeichert werden. Die Referenzwerte und/oder Schwellwerte können aber auch aus Handbüchern und Anleitungen entnommen werden. Zudem können diese auch vom Hersteller vorgegeben oder bei Bedarf vom Hersteller an die Anlage übermittelt werden. Besonders vorteilhaft ist die Speicherung der Referenzwerte und/oder der Schwellwerte in den einzelnen Kraftmessmodulen, dadurch kann eine modulare Austauschbarkeit der Module erreicht werden.

In einer weiteren Ausgestaltung der Erfindung weisen alle Modulverbindungskabel einen weitgehend identischen Leitungswiderstand, insbesondere weitgehend identische Länge, Materialien und Leitungsquerschnitt auf. In diesem Fall können die Schwellwerte durch Berechnungen von Spannungsteilerschaltungen besonders einfach bestimmt werden.

In einer weiteren Ausführungsform weisen das Verzweigungselement und/oder die Kraftmessmodule eine Vorrichtung zur Überwachung der Terminierung der Kommunikationsverbindung und/oder zur Durchführung deren Terminierung auf. Da eine fehlende Terminierung starke Störungen der Übertragung der Kommunikationssignal bewirken können, können diese in dieser Ausgestaltung erkannt und gemeldet oder gar selbstständig durch die Kraftmessvorrichtung behoben werden.

In einer weiteren Ausführungsform weist das Kraftmessmodul oder das Modulverbindungskabel eine Vorrichtung zur Unterbrechung der Weiterleitung der Stromversorgung auf. Damit kann gewährleistet werden, dass die Stromzufuhr auf eine bestimmte maximale Anzahl von Kraftmessmodulen begrenzt ist. Beispielsweise kann damit sicher gestellt werden, dass die Stromversorgung zwischen maximal vier Stromzufuhrmitteln übertragbar ist. Dadurch kann die maximale Leistungsübertragung, insbesondere die maximale Strombelastung, der Stromzuführung unter einem bestimmten Maximalwert gehalten werden.

Diese Strombegrenzung ist besonders wichtig bei explosionsgefährdeten Umgebungen, wo besondere Vorschriften bezüglich des maximalen Stromverbrauchs der Kraftmessmodul und/oder der Kraftmessvorrichtung eingehalten werden müssen. Ausserdem erlaubt diese Unterbrechung eine Auftrennung der Kraftmessvorrichtung in verschiedene, unabhängig versorgte Subsysteme. Diese Auftrennung kann beispielsweise mittels manuellen oder elektromagnetischen Schaltern oder mittels eines speziellen Modulverbindungskabels erreicht werden. Beim dem speziellen Modulverbindungskabels können beispielsweise die Kommunikationsleitungen durchgehend kontaktiert sein während die Leitungen zur Weiterleitung der Stromversorgung nicht kontaktiert und somit unterbrochen sind. Die Einhaltung der Vorschriften zur Strombegrenzung kann auch durch das Terminal überwacht und durch entsprechende Steuerbefehle des Terminals an die Kraftmessmodule eine Umkonfiguration der Kraftmessvorrichtung erreicht werden.

Ausserdem weist das Kraftmessmodul in einer weiteren, bevorzugten Ausführungsform mindestens einen Steckverbinder, insbesondere zwei Steckverbinder, auf, an welche das Modulverbindungskabel und/oder das Kontrollkabel anschliessbar ist. Dadurch kann die Kraftmessvorrichtung auf effiziente Weise aufgebaut, getestet und gewartet werden.

In einer weiteren Ausgestaltung der Erfindung weist das Kraftmessmodul einen Steckverbinder auf, der gegen Umwelteinflüsse, insbesondere gegen Schmutz, Flüssigkeiten oder Gase, gekapselt ist und/oder deren mindestens eine elektrische Kontaktfläche korrosionsresistent ausgebildet ist. Dadurch wird ein störungssicherer Betrieb der Installation, auch bei harten Umgebungsbedingungen erreicht.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:
- Fig. 1: in schematischer Darstellung einer erfindungsgemässen Mehrfach-Kraftmessvorrichtung mit zwei Kraftmessmodulen im Schnitt, welche jeweils eine Kraftmesszelle, ein Stromzufuhrmittel und ein Kommunikationsmittel aufweisen und welche über Modulverbindungskabel und ein Kontrollkabel mit einer Kontrollvorrichtung verbunden sind;
- Fig. 2: eine Mehrfach-Kraftmessvorrichtung gemäss dem Stand der Technik in Gestalt einer Lastwagen-Wägevorrichtung, aufweisend zwei Messplatten, welche jeweils von vier Kraftmessmodulen gestützt werden;
- Fig. 3: eine erfindungsgemässe Ausgestaltung einer Mehrfach-Kraftmessvorrichtung ähnlich jener aus Figur 2, bei welcher jedoch die Kraftmessmodule mit einem Modulverbindungskabel direkt und reihenförmig miteinander verbunden sind und bei welcher das erste und das letzten Kraftmessmodul der Reihe über ein Verzweigungskabel über ein Verzweigungselement mit dem Kontrollkabel verbunden sind;
- Fig. 4: eine Mehrfach-Kraftmessvorrichtung gemäss Figur 3, jedoch mit zwei Kraftmessmodulen, welche jeweils die Gewichtsanteile von zwei Messplatten messen;
- Fig. 5: das vereinfachte Schaltschema der erfindungsgemässen Mehrfach-Kraftmessvorrichtung mit einer Stromversorgungseinheit, 1 bis n Kraftmessmodulen, Leitungswiderständen, elektrischen Spannungen und einer gemeinsamen Erdung.

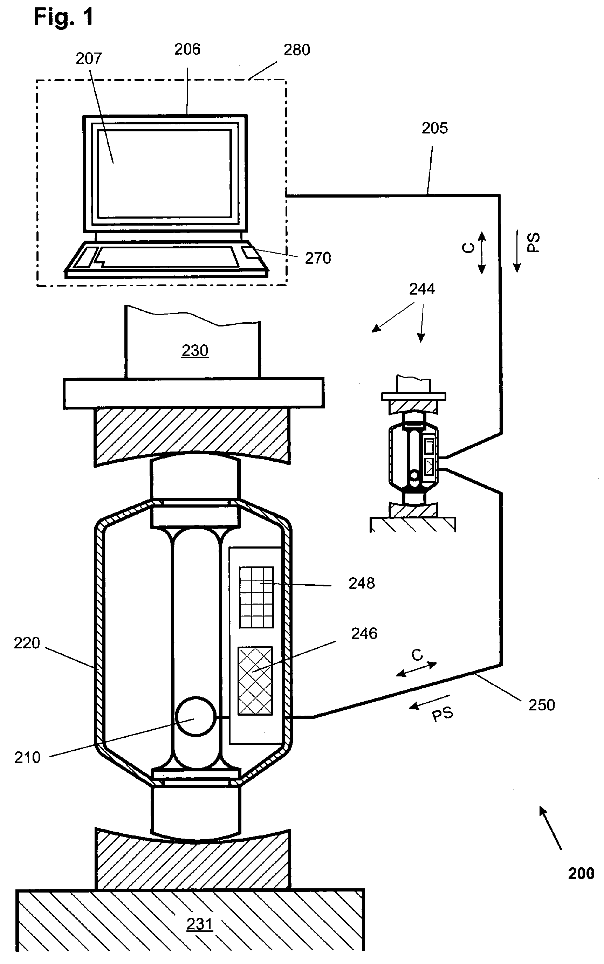

Figur 1 zeigt eine erfindungsgemässe Mehrfach-Kraftmessvorrichtung 200 in Form einer Tanklast-Wägevorrichtung. Pro zu verwiegendem Behälter werden mehrere Kraftmessmodule 244 zwischen den Füssen des Behälters 230 und dem Fundament 231 angeordnet um zu erreichen, dass jeder Fuss des Behälters 230 auf einem Kraftmessmodule 244 steht. Um das Gewicht des Behälters und/oder dessen Inhalt zu ermitteln, müssen die von den Kraftmessmodulen 244 erzeugten Messwerte addiert werden, da es sich um Messwerte von Teilmassen handelt. Dazu werden die Messwerte der einzelnen Kraftmessmodule 244 an ein Terminal 206 übermittelt, dort ausgewertet und auf der Ausgabe 207 dargestellt. Das Terminal 206 ist in einer distanziert platzierten Kontrollvorrichtung 280 angeordnet.

Das Kraftmessmodul 244 weist eine Kraftmesszelle 210 auf, welche von einem Gehäuse 220 umschlossen ist. Das Gehäuse 220 ist in der Regel mit der Kraftmesszelle 210 verschweisst und gegenüber der Umgebung der Kraftmessvorrichtung 200 dicht verschlossen. Im Messeinsatz wird sowohl die Kraftmesszelle 210 als auch das Gehäuse 220 elastisch gestaucht. Die Deformation der Kraftmesszelle 210 wird mittels der Kraftmesszelle 210 gemessen und einem Kommunikationsmittel 248 zugeführt.

Die Stromversorgung des Kraftmessmoduls 244, insbesondere der zugehörigen Elektronik, der Kraftmesszelle 210 und des Kommunikationsmittels 248, wird durch ein Stromzufuhrmittel 246 ermöglicht, welches seinerseits mit der Stromversorgung PS versorgt wird. Diese Stromversorgungseinheit 270 der Mehrfach-Kraftmessvorrichtung 200 ist in der Kontrollvorrichtung 280 angeordnet und in das Terminal 206 integriert.

Die Kraftmessmodule 244 sind mittels eines Modulverbindungskabels 250 direkt miteinander verbunden. Über diese Modulverbindungskabel 250 kann sowohl die Stromversorgung PS als auch die Kommunikation C zwischen den Kraftmessmodulen 244 übertragen werden. Das Modulverbindungskabel 250 verbindet daher die Stromzufuhrmittel 246 und die Kommunikationsmittel 248 der jeweiligen Kraftmessmodule 244 miteinander. Des Weiteren ist ein Kraftmessmodul 244 über ein Kontrollkabel 205 mit der Kontrollvorrichtung 280 verbunden. Das Kontrollkabel 205, das sogenannte "Home-run Kabel", überbrückt die oftmals grössere Distanz zwischen dem Segmentkoppler 204 und der Kontrollvorrichtung 280 und stellt somit die unmittelbare Verbindung zur Kontrollvorrichtung 280 her.

Diese Stromversorgungseinheit 270 der Mehrfach-Kraftmessvorrichtung 200 ist in der Kontrollvorrichtung 280 angeordnet und in das Terminal 206 integriert. Die Verteilung der Stromversorgung PS erfolgt über das Kontrollkabel 205 und das Modulverbindungskabel 250 an das Stromzufuhrmittel 246 der einzelnen Kraftmessmodule 244.

In gleicher Weise sind auch die Kommunikationsmittel 248 der Kraftmessmodule 244 mit dem Terminal 206 verbunden um die Signale der Kommunikation C, insbesondere der Messwerte, der verarbeiteten Resultate und der Steuerbefehle zu übermitteln. Diese Kommunikation C wird in bidriektionaler Richtung vom Kommunikationsmittel 248 zum Terminal 206 übertragen, also vom Kommunikationsmittel 248 über das Modulverbindungskabel 250 und das Kontrollkabel 205 zum Terminal 206 in der Kontrollvorrichtung 280.

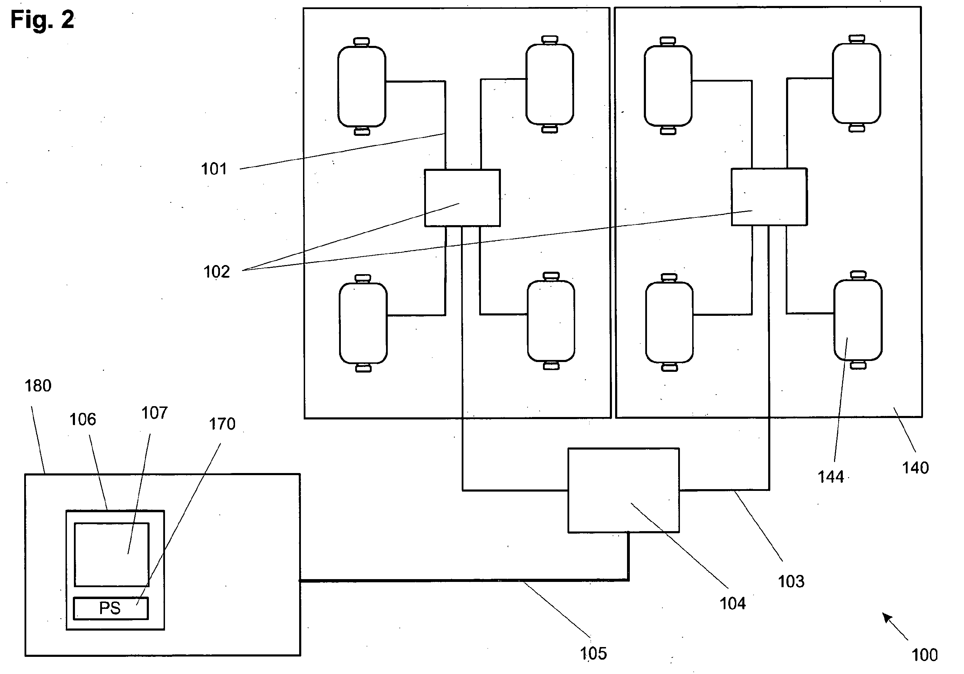

Als Anordnung gemäss dem Stand der Technik zeigt Figur 2 die schematische Darstellung einer Mehrfach-Kraftmessvorrichtung 100 in Gestalt einer Lastwagen-Wägevorrichtung. Diese weist zwei unabhängige Messplatten 140 auf, welche jeweils von vier Kraftmessmodulen 144 gestützt werden. Zum Wiegen werden die Lastwagen auf die Messplatten gestellt und die resultierenden Kräfte mit Hilfe der Kraftmessmodule 144 gemessen. Die Verarbeitung der Messergebnisse erfolgt dann im Terminal 106.

Jedes Kraftmessmodul 144 ist über eine Verteilerleitung 101 an eine Verteilvorrichtung 102 angeschlossen. Die Verteilvorrichtung 102 ist dann ihrerseits über ein Segmentkabel 103 mit einem Segmentkoppler 104 verbunden. Schliesslich ist der Segmentkoppler 104 über ein Kontrollkabel 105 mit der Kontrollvorrichtung 180 verbunden. Der Segmentkoppler 104 koppelt zwei unabhängige, physisch getrennte Segmente der Mehrfach-Kraftmessvorrichtung 100 zusammen. Ein Segment wird jeweils durch eine Messplatte 140, die zugehörigen Kraftmessmodule 144, die Verteilleitungen 101, die Verteilvorrichtung 102 und das Segmentkabel 103 gebildet.

Die Stromversorgungseinheit 170 ist im Terminal 106 integriert, welches eine Anzeige 107 aufweist und welches in der Kontrollvorrichtung 180 angeordnet ist. Die Verteilung der Stromversorgung PS erfolgt über das Kontrollkabel 105, den Segmentkoppler 104, das Segmentkabel 103 und die Verteilvorrichtung 102 und schliesslich wird über die Verteilleitung 101 an die einzelnen Kraftmessmodule 144. In entgegen gesetzter Richtung werden die Messwerte der Kraftmessmodule 144 zum Terminal 106 übertragen, also vom Kraftmessmodule 144, über die Verteilleitung 101, die Verteilvorrichtung 102, das Segmentkabel 103, den Segmentkoppler 104, das Kontrollkabel 105 zum Terminal 106.

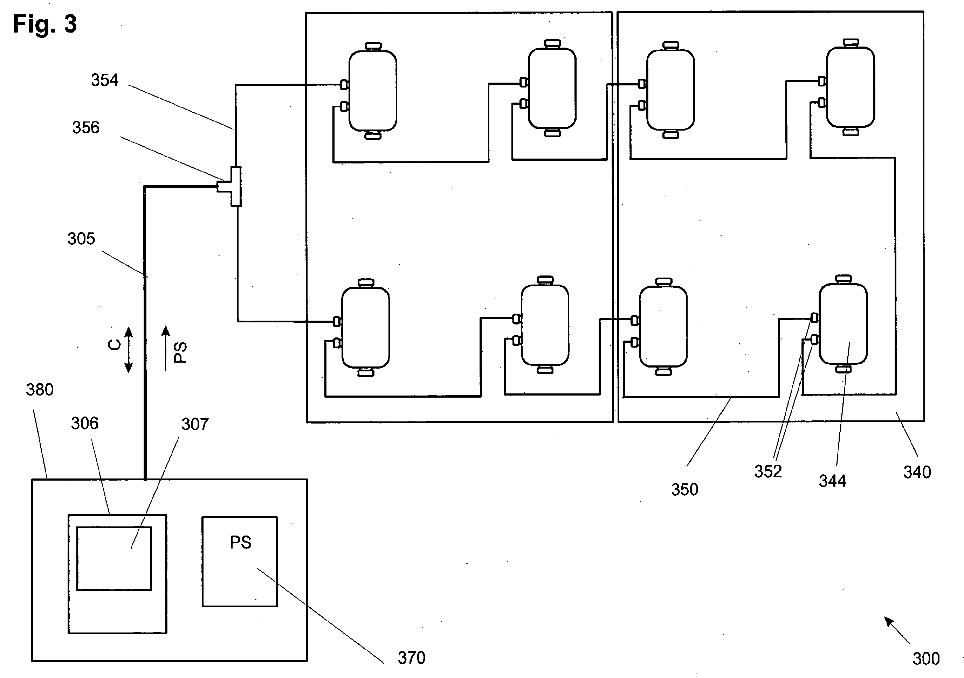

Figur 3 zeigt eine erfindungsgemässe Ausgestaltung der Mehrfach-Kraftmessvorrichtung 300. Die Kraftmessmodule 344 sind jeweils mittels Modulverbindungskabel 350 direkt und reihenförmig miteinander verbunden. Über diese Modulverbindungskabel 350 kann sowohl die Stromversorgung PS als auch die Kommunikation C zwischen den Kraftmessmodulen 344 übertragen werden. Das Modulverbindungskabel 350 verbindet daher die Stromzufuhrmittel 246 und die Kommunikationsmittel 248 der jeweiligen Kraftmessmodule 344 miteinander.

Die Kommunikation C kann beispielsweise darin bestehen, dass Messwerte, deren verarbeitete Ergebnisse in einer Richtung und Steuerbefehle in entgegen gesetzter Richtung übertragen werden. Diese bidirektionale Kommunikation C kann auf getrennten Kabelverbindungen unabhängig von der Stromversorgung PS und/oder zusammen mit den Stromversorgungsleitungen auf getrennten Adern innerhalb des gleichen Kabels und/oder auf den Stromversorgungsleitungen, vorzugsweise als moduliertes Signal, übertragen werden.

Das Modulverbindungskabel 350 ist an beiden Enden mittels Steckverbinder 352 an das Kraftmessmodul 344 angeschlossen. Dementsprechend weist jedes Kraftmessmodul 344 zwei Steckverbinder 352 auf, über welche jeweils die beiden Nachbarn der Reihe angeschlossen werden können, beim ersten und letzten Kraftmessmodul 344 wird allerdings nur ein Nachbar der Reihe angeschlossen.

Ferner ist das erste und das letzten Kraftmessmodul 344 der Reihe über ein Verzweigungskabel 354 und ein Verzweigungselement 356 an das Kontrollkabel 305 angeschlossen. Dabei ist das Verzweigungselement als einfache T-Verzweigung ausgeführt und dient der Verzweigung der Stromversorgung PS und der Kommunikation C auf das erste und das letzten Kraftmessmodul 344 der Reihe. Dementsprechend sind Verteilleitungen 101, Verteilvorrichtungen 102, Segmentkabel 103 und Segmentkoppler 104 nicht vorhanden.

Schliesslich wird sowohl die Stromversorgung PS der Stromversorgungseinheit 370 an die Kraftmessmodule 344 als auch die Kommunikation C zwischen dem Terminal 306 und den Kraftmessmodulen 344 über das Kontrollkabel 305 übertragen. Ausserdem werden in dieser Ausgestaltung die Kraftmessmodulen 344 nicht durch das Terminal 306 sondern durch eine getrennte Stromversorgungseinheit 370 mit Strom, beziehungsweise mit elektrischer Energie versorgt. Die Stromversorgungseinheit 370 befindet sich zusammen mit dem Terminal 306 und mit der Anzeige 307 in der Kontrollvorrichtung 380.

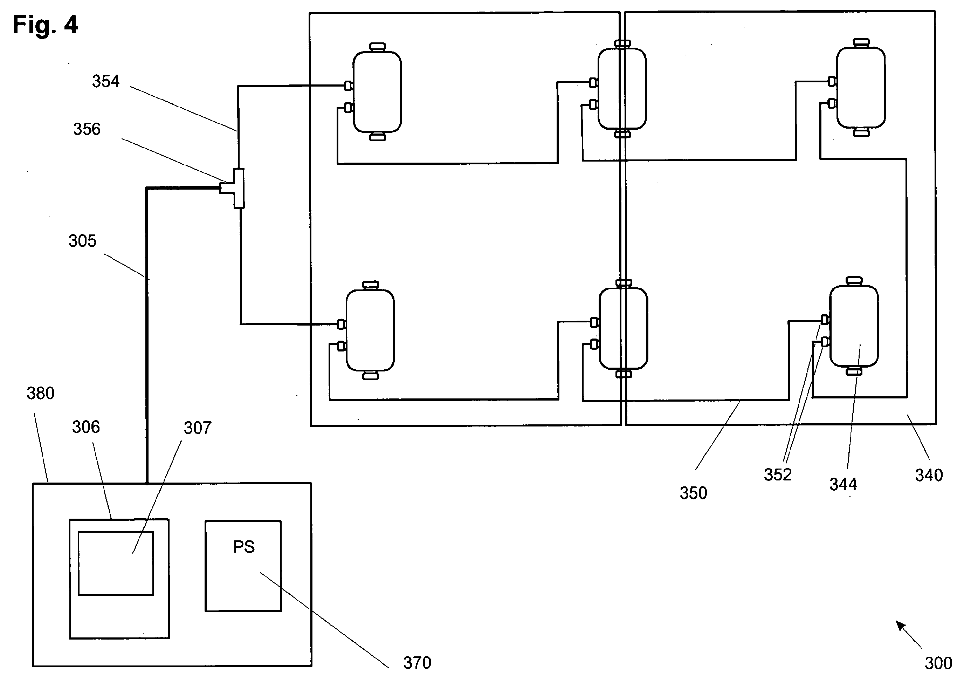

Eine weitere erfindungsgemässe Ausgestaltung der Mehrfach-Kraftmessvorrichtung 300 ist in Figur 4 dargestellt. Diese Ausgestaltung entspricht Figur 3, in diesem Fall werden jedoch zwei Kraftmessmodule 344 eingesetzt, welche jeweils die Gewichtsanteile beider Messplatten 340 messen. Diese doppelte Krafteinleitung kann beispielsweise mit einer flexibel gelagerten mechanischen Vorrichtung erreicht werden. Durch diese Anordnung ergibt sich eine Reduktion der benötigten Kraftmessmodule 344 von acht auf sechs Stück.

Die direkte Verbindung kann beispielsweise als Klemmverbindung, Schraubverbindung, fest montierte Verdrahtung oder Lötverbindung ausgeführt sein.

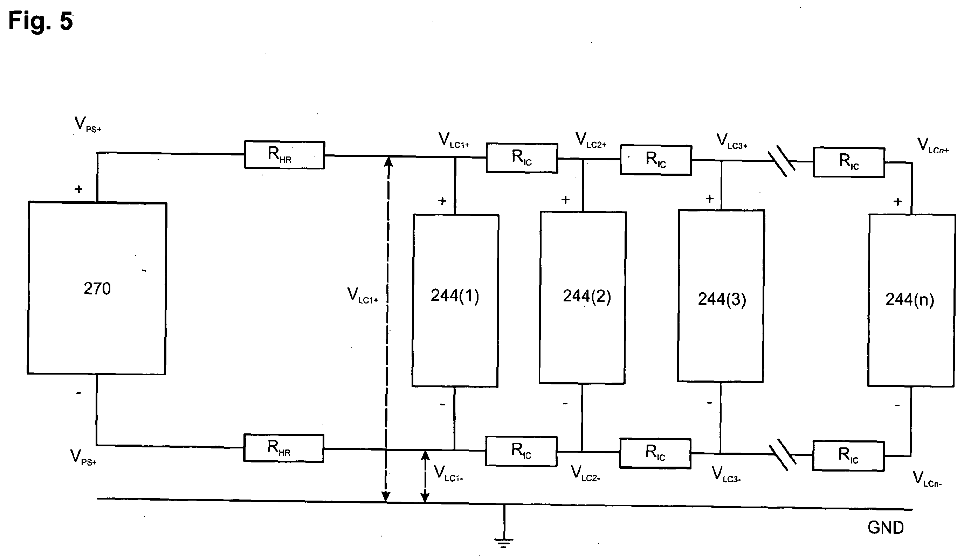

Figur 5 zeigt ein vereinfachte Schaltschema der erfindungsgemässen Mehrfach-Kraftmessvorrichtung 300 mit einer Stromversorgungseinheit 270, 1 bis n Kraftmessmodulen 244(1) ... 244(n), Leitungswiderständen R_{HR}, R_{IC}, elektrischen Spannungen V_{LC1+}, ..., V_{LCn+}, V_{LC1-}, ..., V_{LCn-} und einer gemeinsamen Erdung GND.

Die Leitungswiderstande R_{HR}, R_{IC} sind durch die Leitungswiderstände R_{HR} des Kontrollkabels 205 und die Leitungswiderstände R_{IC} des Modulverbindungskabels 250 gegeben. Dementsprechend kann bei jedem Kraftmessmodul 244(i), 1 ≤ i ≤ n, eine positive Spannung V_{LCi+} und eine negative Spannung V_{LCi-} der Versorgungsspannung bezüglich des gemeinsamen Erdpotentials gemessen werden. Diese Spannungen sind charakteristisch für jedes einzelne der Kraftmessmodule 244(1) ... 244(n). Das Erdpotential ist durch die Ummantelung der Kabel und/oder der Kraftmessmodule 244(1) ... 244(n) und insbesondere durch die Erdung der gesamten Kraftmessvorrichtung 200 gegeben.

Vorzugsweise werden die gemessen Spannungen V_{LC1+}, ..., V_{LCn+}, V_{LC1-}, ..., V_{LCn-} mit erwarteten Werten oder mit Schwellwerten und/oder Toleranzwerten verglichen. Beim Überschreiten dieser Werte werden entsprechende Meldungen an das Terminal kommuniziert. Das Terminal kann entsprechende Aktionen auslösen wie das Alarmieren, das Informieren, das Warnen des Benutzers oder das Korrigieren der Messwerte oder das Kalibrieren oder das Justieren der Messvorrichtung.

In dieser Ausgestaltung der Erfindung sind die Leitungswiderstände R_{IC} der Modulverbindungskabel 250 jeweils weitgehend identisch. Das kann durch geeignete Wahl der Länge, Materialien und Leitungsquerschnitt der einzelnen Leitungen im Modulverbindungskabel 250 erreicht werden. Auf diese Weise können die zu erwartenden Werte und die entsprechenden Schwellwerte der Spannung V_{LC1+}, ..., V_{LCn+}, V_{LC1-}, ..., V_{LCn-} auf einfache Weise berechnet werden. Ebenso werden weitgehend identische Leitungswiderstände R_{HR} des Kontrollkabels 205 durch geeignete Wahl der Leitungen des Kontrollkabels 205 erreicht. Eine Berechnung der zu erwartenden Werte und Schwellwerte kann aber auch ohne weiteres für beliebige Leitungswiderstände durchgeführt werden.

Bei den erfindungsgemässen Ausgestaltungen kann, je nach Konfiguration der Mehrfach-Kraftmessvorrichtung 200 und des Terminals 206, das Kommunikationsmittel 248 selbständig kontinuierlich oder periodisch und/oder zufällig oder nach Auftreten einer Veränderung entsprechende Informationen an das Terminal 206 übermitteln. Selbstverständlich kann auch das Terminal 206 Informationen, wie Messwerte oder Messergebnisse bei den Kommunikationsmittel 248 kontinuierlich, periodisch oder nach dem Zufallsprinzip abrufen.

Das erfindungsgemässe Verrichtung kann mittels zentralisierten und/oder dezentralisierten Teilen einer Steuervorrichtung einer Anlage, beispielsweise mit dem Terminal 206 und/oder dem Kraftmessmodul 244 durchgeführt werden, die dazu mit den entsprechenden Betriebsprogrammen versehen sind. Möglich ist jedoch auch eine Aufgabenteilung zwischen den verschiedenen Ebenen der Prozesssteuerung. Durch geeignete Massnahmen kann das erfindungsgemässe Verfahren somit auf beliebigen ein- oder mehrstufigen Installationen mit geringem Aufwand implementiert werden. Terminal 206 und/oder Verzweigungselement 256 können auch in einem mobilen Gerät eingebaut sein, mit dessen Hilfe die einzelnen Messwerte und/oder Messergebnisse über Funkverbindungen abgefragt werden. Dazu können die einzelnen Kraftmessmodule 244 über einen Identifikationscode verfügen, wie dies im Stand der Technik für viele Anwendungen bekannt ist und verwendet wird.

### Bezugszeichenliste

- 100, 200, 300: Mehrfach-Kraftmessvorrichtung
- 101: Verteilerleitung
- 102: Verteilvorrichtung
- 103: Segmentkabel
- 104: Segmentkoppler
- 105, 205, 305: Kontrollkabel
- 106, 206, 306: Terminal
- 107, 207, 307: Anzeige
- 210: Kraftmesszelle
- 220: Gehäuse
- 230: Behälterfuss
- 231: Fundament
- 140, 240, 340: Messplatte
- 144, 244, 344: Kraftmessmodul
- 246: Stromzufuhrmittel
- 248: Kommunikationsmittel
- 250, 350: Modulverbindungskabel
- 352: Steckverbinder
- 354: Verzweigungskabel
- 356: Verzweigungselement
- 170, 270, 370: Stromversorgungseinheit
- 180, 280, 380: Kontrollvorrichtung

- C: Kommunikation
- PS: Stromversorgung

## Patentansprüche

1. Mehrfach-Kraftmessvorrichtung (200, 300), insbesondere eine Mehrfach-Wägevorrichtung, mit mindestens drei, jeweils eine Kraftmesszelle (210) und ein Stromzufuhrmittel (246) aufweisenden Kraftmessmodulen (244, 344), auf welche Kraftmessmodule die zu messende Kraft aufgeteilt wird, und mit einer Stromversorgungseinheit (270, 370), welche der Stromversorgung der Kraftmessmodule (244, 344) dient, **dadurch gekennzeichnet, dass** das Stromzufuhrmittel (246) mindestens eines Kraftmessmoduls (244, 344) direkt oder über ein Verzweigungselement (356) an ein mit der Stromversorgungseinheit (270, 370) verbundenes Kontrollkabel (205, 305) angeschlossen ist, und dass die mindestens drei Kraftmessmodule (244, 344) mittels mindestens eines, der Weiterleitung der Stromversorgung dienenden Modulverbindungskabels (250, 350) reihenförmig miteinander verbunden sind, und dass das ersten Kraftmessmodul (244, 344) der Reihe und das letzte Kraftmessmodul (244, 344) der Reihe jeweils direkt oder über das Verzweigungselement (356) mit dem Kontrollkabel (205, 305) verbunden sind.

2. Mehrfach-Kraftmessvorrichtung (200, 300) nach Anspruch 1, **dadurch gekennzeichnet, dass** maximal ein Kraftmessmodul (244, 344) mit dem Kontrollkabel (205, 305) verbunden ist.

3. Mehrfach-Kraftmessvorrichtung (200, 300) nach einem der Ansprüche 1 bis 2, **dadurch gekennzeichnet, dass** alle Kraftmessmodulen (244, 344) mittels des Modulverbindungskabels (250, 350) reihenförmig miteinander verbunden sind.

4. Mehrfach-Kraftmessvorrichtung (200, 300) nach einem der Ansprüche 1 bis 3, **dadurch gekennzeichnet, dass** die Kraftmessmodule (244, 344) jeweils ein Kommunikationsmittel (248) aufweisen und dass über das Modulverbindungskabel (250, 350) Kommunikationssignale zwischen diesen Kommunikationsmitteln (248), insbesondere mittels eines Bussystems, gegebenenfalls mittels eines CAN-Bussystems, übertragbar sind.

5. Mehrfach-Kraftmessvorrichtung (200, 300) nach einem der Ansprüche 1 bis 4, **dadurch gekennzeichnet, dass** die Kraftmessmodule (244, 344) jeweils eine Vorrichtung zur Bestimmung und/oder Überwachung der elektrischen Spannung (V_{LC1}) des Stromzufuhrmittels (246), insbesondere der positiven Spannung (V_{LC1+}) und/oder der negativen Spannung (V_{LC1-}), gegebenenfalls bezogen auf ein gemeinsames Erdpotential (GND), aufweisen.

6. Mehrfach-Kraftmessvorrichtung (200, 300) nach einem der Ansprüche 1 bis 5, **dadurch gekennzeichnet, dass** alle Modulverbindungskabel (250, 350) einen weitgehend identischen Leitungswiderstand (R_{IC}), insbesondere weitgehend identische Längen, Materialien und Leitungsquerschnitte aufweisen.

7. Mehrfach-Kraftmessvorrichtung (200, 300) nach einem der Ansprüche 1 bis 6, **dadurch gekennzeichnet, dass** das Kraftmessmodul (244, 344) oder das Modulverbindungskabel (250, 350) eine Vorrichtung zur Unterbrechung der Weiterleitung der Stromversorgung aufweist.

8. Mehrfach-Kraftmessvorrichtung (200, 300) nach einem der Ansprüche 1 bis 7, **dadurch gekennzeichnet, dass** das Kraftmessmodul (244, 344) mindestens einen Steckverbinder (352), insbesondere zwei Steckverbinder (352), aufweist, an welchen das Modulverbindungskabel (250, 350) und/oder das Kontrollkabel (205, 305) anschliessbar ist.

9. Mehrfach-Kraftmessvorrichtung (200, 300) nach Anspruch 8, **dadurch gekennzeichnet, dass** der Steckverbinder (352) gegen Umwelteinflüsse, insbesondere gegen Schmutz, Flüssigkeiten oder Gase, gekapselt und/oder abgedichtet ist und/oder deren mindestens eine elektrische Kontaktfläche korrosionsresistent ausgebildet ist.

10. Verfahren zur Bestimmung und Überwachung des Zustandes einer Mehrfach-Kraftmessvorrichtung (200, 300) nach einem der Ansprüche 1 bis 9 mit mindestens drei Kraftmessmodulen (244, 344), **dadurch gekennzeichnet, dass** die Stromversorgung, insbesondere die elektrische Spannung der Stromversorgung (V_{LC1}), der Kraftmessmodule (244, 344) überwacht wird.

11. Verfahren nach Anspruch 10, **dadurch gekennzeichnet, dass** die elektrischen Spannungen der Kraftmessmodule (244, 344) auf Einhaltung von Schwellwerten überprüft werden und bei Störungen und/oder Überschreitungen der Schwellwerte Aktionen, wie das Übertragen von Meldungen und/oder die Neukalibrierung oder die Abschaltung des betreffenden Kraftmessmoduls (244, 344), ausgelöst werden.

12. Verfahren nach Anspruch 11, **dadurch gekennzeichnet, dass** die Schwellwerte mittels theoretischen Berechnungen, insbesondere unter Berücksichtigung der charakteristischen Grössen der Modulverbindungskabel (250, 350) wie Leitungslänge und Leitungsquerschnitt und/oder der Innenwiderstände des Kraftmessmoduls (244, 344), und/oder mittels mindestens einer Referenzmessung bestimmt werden.

13. Verfahren nach einem der Ansprüche 10 bis 12, **dadurch gekennzeichnet, dass** die elektrischen Spannung (V_{LC1}) des Stromzufuhrmittels, insbesondere die positiven Spannung (V_{LC1+}) und/oder die negativen Spannung (V_{LC1-}), bezüglich eines gemeinsamen Potentials, insbesondere eines Erdpotentials (GND) gemessen werden.

14. Verfahren nach einem der Ansprüche 10 bis 13, **dadurch gekennzeichnet, dass** die Kraftmessmodule (244, 344) jeweils ein Kommunikationsmittel (248) aufweisen welche untereinander verbunden sind und dessen Verbindungen bezüglich der Terminierung überwacht und gegebenenfalls automatisch terminiert werden.

15. Verfahren nach einem der Ansprüche 10 bis 14, **dadurch gekennzeichnet, dass** eine reihenförmige Verbindung von maximal vier Kraftmessmodulen (244, 344) vom Terminal (206, 306) und/oder von der der Verzweigungselement (356) und/oder von den Kraftmessmodulen (244, 344) erkannt und gegebenenfalls eine Weiterleitung der Stromversorgung an weitere Kraftmessmodule (244, 344) unterbunden wird.

## Claims

1. Multi-module force measuring device (200, 300), in particular a multi-module weighing device, comprising at least three force-measuring modules (244, 344) among which the force that is to be measured is divided up, wherein each force-measuring module (244, 344) includes a force-measuring cell (210) and a current-delivery means (246), and further comprising a power supply unit (270, 370) which serves to supply electric current to the force-measuring modules (244, 344), **characterized in that** the current-delivery means (246) of at least one of the force-measuring modules (244, 344) is linked directly or by way of a junction element (356) to a controller cable (205, 305) which is connected to the power supply unit (270, 370), and that the at least three force-measuring modules (244, 344) are connected to each other in a string by means of at least one module-connector cable (250, 350) which forms the onward continuation of the supply line for the electric current, and that the first force-measuring module (244, 344) of the string and the last force-measuring module (244, 344) of the string are each connected directly or by way of the junction element (356) to the controller cable (205, 305).

2. Multi-module force measuring device (200, 300) according to claim 1, **characterized in that** only one force-measuring module (244, 344) is connected to the controller cable (205, 305).

3. Multi-module force measuring device (200, 300) according to one of the claims 1 or 2, **characterized in that** all force-measuring modules (244, 344) are connected to each other in a string by means of the module-connector cable (250, 350).

4. Multi-module force measuring device (200, 300) according to one of the claims 1 to 3, **characterized in that** each of the force-measuring modules (244, 344) comprises a communication means (248) and that communication signals can be transmitted between the communication means (248) by way of the module-connector cable (250, 350), in particular by means of a bus system, including the possibility of a CAN-bus system.

5. Multi-module force measuring device (200, 300) according to one of the claims 1 to 4, **characterized in that** each of the force-measuring modules (244, 344) comprises a device for determining and/or monitoring the voltage (V_{LC1}) of the current delivery means (246), in particular the positive voltage (V_{LC1+}) and/or the negative voltage (V_{LC1-}) which may be referenced to a common ground potential (GND).

6. Multi-module force measuring device (200, 300) according to one of the claims 1 to 5, **characterized in that** all module-connector cables (250, 350) have largely identical values of line resistance (R_{IC}), in particular largely identical lengths, materials and conductor cross-sections.

7. Multi-module force measuring device (200, 300) according to one of the claims 1 to 6, **characterized in that** the force-measuring module (244, 344) or the module-connector cable (250, 350) comprises a device to interrupt the onward continuation of the power supply line.

8. Multi-module force measuring device (200, 300) according to one of the claims 1 to 7, **characterized in that** the force-measuring module (244, 344) comprises at least one plug connector (352), in particular two plug connectors (352), to which the module-connector cable (250, 350) and/or the controller cable (205, 305) can be connected.

9. Multi-module force measuring device (200, 300) according to claim 8, **characterized in that** the plug connector (352) is encapsulated and/or sealed against environmental factors, in particular against dirt, liquids or gases, and/or that its at least one electrical contact surface is designed to be corrosion-resistant.

10. Method of determining and monitoring the condition of a multi-module force measuring device (200, 300) according to one of the claims 1 to 9 with at least three force-measuring modules (244, 344), **characterized in that** the supply of electrical current, in particular the voltage of the power supply (V_{LC1}), of the force-measuring modules (244, 344), is being monitored.

11. Method according to claim 10, **characterized in that** the voltages of the force-measuring modules (244, 344) are monitored in regard to their conformance to threshold values, and that disturbances and/or violations of the threshold values cause actions to be triggered, such as the transmission of messages and/or the recalibration or switching-off of the respective force-measuring module (244, 344).

12. Method according to claim 11, **characterized in that** the threshold values are determined by means of theoretical calculations taking into account in particular the characteristics of the module-connector cables (250, 350) such as conductor length and conductor cross-section and/or the internal resistance values of the force-measuring module (244, 344), and/or that said threshold values are determined by means of at least one reference measurement.

13. Method according to one of the claims 10 to 12, **characterized in that** the voltage (V_{LC1}) of the current delivery means, in particular the positive voltage (V_{LC1+}) and/or the negative voltage (V_{LC1-}) are measured in relation to a common potential, in particular a ground potential (GND).

14. Method according to one of the claims 10 to 13, **characterized in that** each of the force-measuring modules (244, 344) comprises a communication means (248), that the communication means of the force-measuring modules (244, 344) are connected to each other, and further that the connections of each communication means are monitored in regard to their termination and are, if necessary, automatically terminated.

15. Method according to one of the claims 10 to 14, **characterized in that** a string connection of a maximum of four force-measuring modules (244, 344) can be recognized by the terminal (206, 306) and/or by the junction element (356) and/or by the force-measuring modules (244, 344) and that, if necessary, an onward continuation of the power supply line to further force-measuring modules (244, 344) is interrupted.

## Revendications

1. Dispositif de mesure de force multiple (200, 300), en particulier un dispositif de pesage, comprenant au moins trois modules de mesure de force (244, 344) présentant une cellule de mesure de force (210) et un moyen d'alimentation en courant (246), la force à mesurer étant répartie sur lesdits modules de mesure de force, et comprenant une unité d'alimentation en courant (270, 370) servant à l'alimentation en courant des modules de mesure de force (244, 344), **caractérisé en ce que** le moyen d'alimentation en courant (246) d'au moins un module de mesure de force (244, 344) est raccordé directement ou par le biais d'un élément de ramification (356) à un câble de commande (205, 305) relié à l'unité d'alimentation en courant (270, 370), et **en ce que** les au moins trois modules de mesure de force (244, 344) sont reliés entre eux en rangée au moyen d'au moins un câble de liaison de modules (250, 350) servant à la transmission de l'alimentation en courant, et **en ce que** le premier module de mesure de force (244, 344) de la rangée et le dernier module de mesure de force (244, 344) de la rangée sont respectivement reliés au câble de commande (205, 305), directement ou par le biais de l'élément de ramification (356).

2. Dispositif de mesure de force multiple (200, 300) selon la revendication 1, **caractérisé en ce qu'**au maximum un module de mesure de force (244, 344) est relié au câble de commande (205, 305).

3. Dispositif de mesure de force multiple (200, 300) selon l'une des revendications 1 à 2, **caractérisé en ce que** tous les modules de mesure de force (244, 344) sont reliés entre eux en rangée au moyen du câble de liaison de modules (250, 350).

4. Dispositif de mesure de force multiple (200, 300) selon l'une des revendications 1 à 3, **caractérisé en ce que** les modules de mesure de force (244, 344) présentent respectivement un moyen de communication (248), et **en ce que** des signaux de communication peuvent être transmis entre ces moyens de communication (248) par le biais du câble de liaison de modules (250, 350), en particulier au moyen d'un système de bus, le cas échéant au moyen d'un système de bus CAN.

5. Dispositif de mesure de force multiple (200, 300) selon l'une des revendications 1 à 4, **caractérisé en ce que** les modules de mesure de force (244, 344) présentent respectivement un dispositif destiné à déterminer et/ou à surveiller la tension électrique (V_{LC1}) du moyen d'alimentation en courant (246), en particulier la tension positive (V_{LC1+}) et/ou la tension négative (V_{LC1-}), le cas échéant par rapport à un potentiel de terre commun (GND).

6. Dispositif de mesure de force multiple (200, 300) selon l'une des revendications 1 à 5, **caractérisé en ce que** tous les câbles de liaison de modules (250, 350) présentent une résistance de ligne (R_{IC}) largement identique, en particulier des longueurs, des matériaux et des sections transversales de ligne largement identiques.

7. Dispositif de mesure de force multiple (200, 300) selon l'une des revendications 1 à 6, **caractérisé en ce que** le module de mesure de force (244, 344) ou le câble de liaison de modules (250, 350) présente un dispositif destiné à interrompre la transmission de l'alimentation en courant.

8. Dispositif de mesure de force multiple (200, 300) selon l'une des revendications 1 à 7, **caractérisé en ce que** le module de mesure de force (244, 344) présente au moins un connecteur enfichable (352), en particulier deux connecteurs enfichables (352), auxquels peut/peuvent être raccordé(s) le câble de liaison de modules (250, 350) et/ou le câble de commande (205, 305).

9. Dispositif de mesure de force multiple (200, 300) selon la revendication 8, **caractérisé en ce que** le connecteur enfichable (352) est blindé et/ou isolé contre les influences environnementales, en particulier contre la saleté, les liquides ou les gaz, et/ou présente au moins une surface de contact électrique conçue de manière à résister à la corrosion.

10. Procédé de détermination et de surveillance de l'état d'un dispositif de mesure de force multiple (200, 300) selon l'une des revendications 1 à 9, avec au moins trois modules de mesure de force (244, 344), **caractérisé en ce que** l'alimentation en courant, en particulier la tension électrique de l'alimentation en courant (V_{LC1}), des modules de mesure de force (244, 344) est surveillée.

11. Procédé selon la revendication 10, **caractérisé en ce que** les tensions électriques des modules de mesure de force (244, 344) sont vérifiés quant au respect de valeurs seuil, et des actions, telles que la transmission de signalements et/ou le réétalonnage ou l'arrêt du modules de mesure de force (244, 344) concerné, sont déclenchées en cas de panne et/ou de dépassement des valeurs seuil.

12. Procédé selon la revendication 11, **caractérisé en ce que** les valeurs seuil sont déterminées au moyen de calculs théoriques, en particulier en tenant compte des grandeurs caractéristiques des câbles de liaison de modules (250, 350), telles que la longueur de ligne et la section transversale de ligne et/ou les résistances internes du module de mesure de force (244, 344), et/ou au moyen d'au moins une mesure de référence.

13. Procédé selon l'une des revendications 10 à 12, **caractérisé en ce que** la tension électrique (V_{LC1}) du moyen d'alimentation en courant, en particulier la tension positive (V_{LC1+}) et/ou la tension négative (V_{LC1-}), sont mesurées par rapport à un potentiel commun, en particulier un potentiel de terre (GND).

14. Procédé selon l'une des revendications 10 à 13, **caractérisé en ce que** les modules de mesure de force (244, 344) présentent respectivement un moyen de communication (248), lesquels sont reliés entre eux et dont les liaisons sont surveillées quant à la terminaison et le cas échéant terminées automatiquement.

15. Procédé selon l'une des revendications 10 à 14, **caractérisé en ce qu'**une liaison en rangée d'au moins quatre modules de mesure de force (244, 344) est reconnue par le terminal (206, 306) et/ou par l'élément de ramification (356) et/ou par les modules de mesure de force (244, 344), et **en ce qu'**une transmission de l'alimentation en courant à d'autres modules de mesure de force (244, 344) est empêchée le cas échéant.
